# EUROPEAN PATENT SPECIFICATION

(11) **EP 3 267 079 B1**
(45) Date of publication and mention of the grant of the patent: **22.06.2022**
(21) Application number: 16275097.0
(22) Date of filing: 08.07.2016
(51) Int. Cl.: F16J 15/34, F16H 57/029, F16C 33/78

(54) **ROTARY SEALING ARRANGEMENT**
DREHDICHTUNGSANORDNUNG
AGENCEMENT DE JOINT ROTATIF

(43) Date of publication of application: 10.01.2018
(73) Proprietor: Goodrich Actuation Systems Limited, West Midlands B90 4SS (GB)
(72) Inventor: Davies, Stephen, Shrewsbury, SY4 4SF (GB)
(74) Representative: Dehns

(56) References cited:
- WO-A1-80/01405
- FR-A- 1 139 430
- GB-A- 2 030 236
- US-A- 4 958 942

## Description

### TECHNICAL FIELD

The present disclosure relates to rotary sealing arrangements, in particular rotary sealing arrangement between a rotating shaft and a static housing for example in a gearbox.

### BACKGROUND

A wide variety of rotary sealing arrangements are known. In a known arrangement, a radial seal is mounted in a housing surrounding a shaft. The radial seal comprises a radially projecting sealing lip which makes sealing engagement with an opposed sealing surface of the shaft to reduce lubricant loss from the housing and ingress of environmental materials, for example dirt or fluids, into the housing. Whilst such systems operate quite satisfactorily, they may have certain potential drawbacks.

Firstly, the portion of the shaft which engages with the lip may need to be made from a relatively hard material (for example having a hardness of 55Rc or higher to ensure a viable life for the seal. This may complicate the shaft construction and cost as it may have to be plated or plasma sprayed in the sealing region. Moreover, the sealing region of the shaft needs to be produced to high tolerances, thereby adding to complexity and cost.

Secondly, there is no possibility of adjusting the seal. The shaft portion is of a fixed diameter and the radial position of the lip cannot be adjusted. This means provides little flexibility in adapting a seal to different installations.

US 4958942 A discloses a sealing arrangement as set forth in the preamble of claim 1. GB 2030236 A, WO 80/01405 A and FR 1139430 A disclose seal arrangements having a lip seal.

### SUMMARY

The present invention provides a rotary sealing arrangement as set forth in claim 1.

The lip seal may be mounted to and project axially from a radially inwardly extending flange of the mounting part.

The flexible lip seal may comprise a plurality of sealing lips.

The rotary seal element may comprise an annular body mounted on the shaft.

The rotary seal element may be mounted on said shaft in an axially adjustable manner.

In embodiments of the disclosure, an abutment face of the rotary seal element opposite the sealing face may axially abut a rotary abutment surface of or coupled to the shaft.

The abutment face may abut a bearing race mounted to the shaft.

The disclosure also extends to a gearbox comprising an input shaft, an output shaft and a sealing arrangement as disclosed above provided between a housing of the gearbox and one or both of the input and output shafts.

The disclosure also extends to a method of setting the drag of a sealing arrangement, as set forth in claim 9.

In certain embodiments, the method may comprise removing material from the abutment face of the rotary sealing element to adjust the axial thickness of the sealing element body and thereby adjust the distance between the sealing surface of the rotary sealing element and the rotary abutment.

In certain embodiments, the method may comprise placing shims between the abutment face of the rotary sealing element and the rotary abutment to adjust the axial distance between the sealing surface of the rotary sealing element and the rotary abutment.

### BRIEF DESCRIPTION OF DRAWINGS

An embodiment of this disclosure will now be described, by way of example only, with reference to the accompanying drawings in which:
Figure 1 illustrates a gear box incorporating a sealing arrangement in accordance with the disclosure.
Figure 2 shows a detail of the sealing arrangement;
Figure 3 illustrates a first method of adjusting the drag of the sealing arrangement of Figures 1 and 2; and
Figure 4 illustrates a second method of adjusting the drag of the sealing arrangement of Figures 1 and 2.

### DETAILED DESCRIPTION

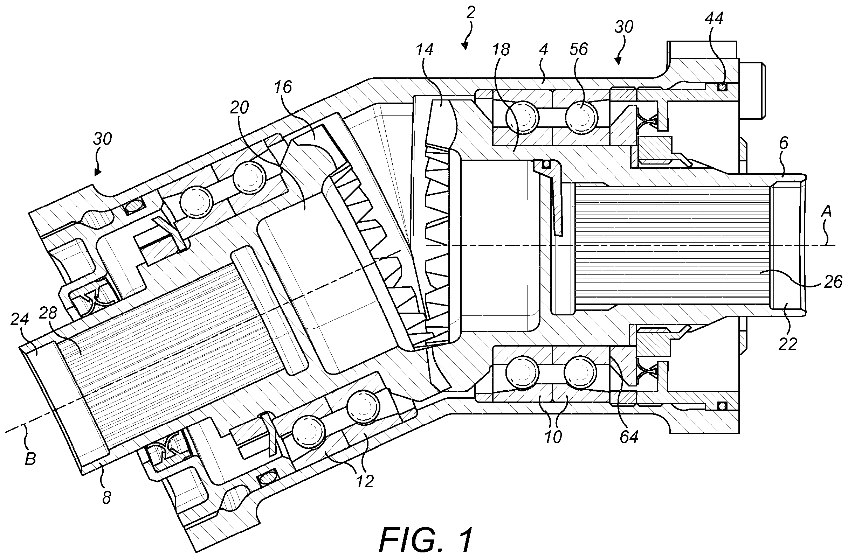

Figure 1 illustrates a gearbox 2 as might be used, for example, in a high lift actuation system for an aircraft wing. A high lift actuation system may comprise a number of gearboxes, in some cases up to 40 gearboxes, on a large aircraft.

In this embodiment, the gearbox 2 comprises a gearbox housing 4, a rotary input shaft 6 and a rotary output shaft 8. While one shaft has been designated an input shaft 6 and the other shaft an output shaft 8, it will be appreciated that either shaft may act as the input or output shafts. The input shaft 6 is rotationally supported in the housing 4 for rotation about a first axis A by a first pair of bearings 10. The output shaft 8 is rotationally supported in the housing 4 for rotation about a second axis B by a second pair of bearings 12. In this example, the bearings 10, 12 are ball bearings but other bearings may be employed in certain embodiments.

It will be seen that in this embodiment the first and second axes A, B are at an angle to one another. In order to transmit drive from the input shaft 6 to the output shaft 8, opposed, intermeshing axially facing gears 14, 16 are provided on the opposed proximal ends 18, 20 of the input shaft 6 and output shaft 8. The distal ends 22, 24 of the input shaft and output shaft 8 are provided with internal splines 26, 28 for coupling to respective draft shafts (not shown). Of course other forms of coupling could be provided.

The gearbox housing 4 will be filled with suitable lubricants, for example oil or grease and to prevent egress of lubricant from the housing 4, or ingress of environmental contaminants such as water or particulates into the housing 4, a rotary seal 30 is provided between the housing 4 and each of the input and output shafts 6, 8.

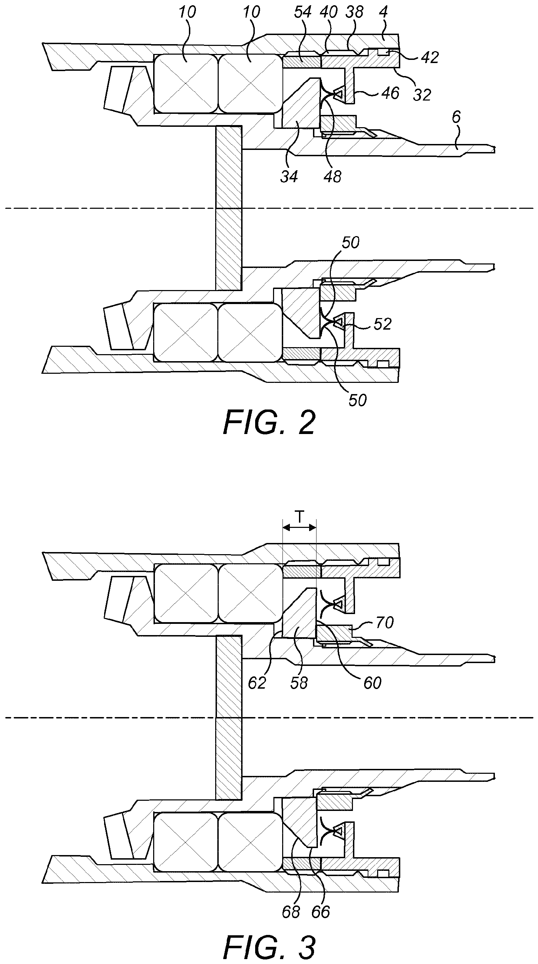

The rotary seal 30 on the input shaft 6 and in accordance with this disclosure is illustrated in greater detail in Figures 2 to 4. The rotary seal on the output shaft 8 of the gearbox Figure 1 is illustrated as a radial lip seal, but it will be appreciated that in accordance with this disclosure, it may alternatively or additionally be constructed as per the rotary seal 30 on the input shaft.

The rotary seal 30 provided at the input shaft 6 comprises a static seal element 32 which is mounted to the gearbox housing 4 and a rotary seal element 34 mounted to the input shaft 6.

The static seal element 32 comprises a mounting part 36 with an externally threaded outer surface portion 38 which is threadably received in an internally threaded bore 40 of the gearbox housing 4. A groove 42 is formed in one end of the external surface portion 38 to receive an O-ring 44 (Fig 1).

The mounting part 36 further comprises a radially inwardly extending flange 46. Mounted to the flange 46 is an axially facing lip seal 48. In this embodiment, the lip seal 48 is bifurcated, comprising two axially extending lips 50. The lip seal 48 may be made as a single component as illustrated or as an assembly. In addition, the lip seal 48 may comprise just a single lip 50 or multiple lips 50. The lip seal 48 may be mounted to the flange by a mount ring 52.

As illustrated, a threaded ring 54 is arranged between the static sealing element 32 and the outer race 56 (Fig 1) of the axially outermost bearing 4 to retain the outer race 56 in the housing.

The rotary seal element 34 is formed as an annular body mounted on, and for rotation with, the input shaft 6.

The rotary seal element 34 comprises a seal runner body 58 comprising an axially facing sealing face 60 and an opposed abutment face 62. The sealing face 60 opposes the lip seal 48 of the static seal element 32, the lip seal resiliently engaging the sealing face 60 in use. The abutment surface 62 engages the inner race 64 of the axially outermost bearing 4. The abutment surface 62 is connected to a radially outermost surface 68 of the rotary seal element 34 by an angled surface 68. This reduces the weight of the rotary seal element 34 and also avoids interference with the outer race 56 of the bearing 4.

The seal runner body 58 is retained axially against the inner race 64 of the bearing 4 by a fastener, for example a threaded clamping ring 70 which is threadably received on the input shaft 6.

The seal runner body 58 is made from a suitably hard material, for example having a hardness of 55Rc or higher. A suitable material may be, for example a stainless steel such as AISI 440C.

An advantage of the embodiment described above over the traditional radial sealing is that the sealing surface 60 may be provided on a relatively small body 58 which may be purpose built for sealing rather than sealing being effected with a surface portion of the shaft 6 which would have to be specially treated for that purpose, adding to the complexity and cost of the shaft 6.

A further advantage of the embodiment described above is that it allows the drag of the seal 30 to be adjusted both during original manufacture and thereafter.

Figure 3 illustrates such an adjustment during the initial build of the seal 30. In this embodiment, the axial thickness T of the seal runner body 58 can be varied to position the sealing face 60 thereof in the appropriate axial position to provide an appropriate drag. To achieve this, the abutment face may be machined, for example ground, to produce the appropriate thickness T. The static seal element 32 may then be inserted to a predetermined depth in the gearbox housing 4 to provide the appropriate axial spacing between the sealing face 60 of the seal runner body 50 and the static seal element 32.

Additionally, to adjust the axial spacing, the seal runner body 58 may be fixed on the shaft 6 and the static seal element 32 mounted to the gearbox housing 4. The mounting part 36 thereof may be adjusted to the appropriate depth in the housing bore 40 via the threaded interface therebetween and secured in position by locking the thread in position using any conventional means, for example adhesive, thread deformation or a self-locking pad or washer.

This arrangement is advantageous in that it reduces the tolerances required of the individual seal components as compared with the traditional radial seal arrangement.

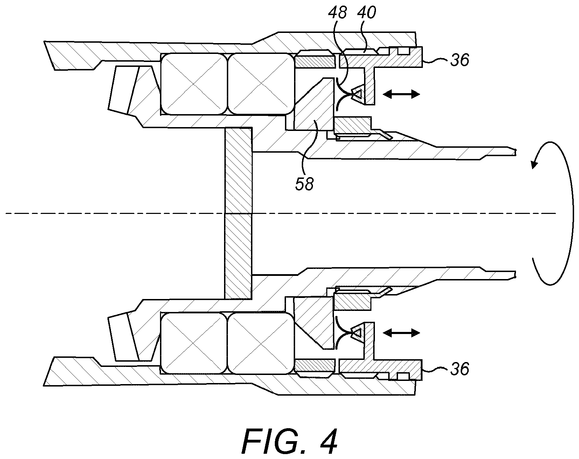

The drag of the seal 30 may vary over time, for example as the seal wears. The embodiment described above also allows this to be accounted for. As illustrated schematically in Figure 4, the squeeze on the lip seal 48 can be varied by screwing the mounting part 36 of the static seal element 32 into or out of the housing bore 40. To increase the drag (as would be required when the seal has worn) the mounting part 36 would be screwed further into the bore 40.

In other circumstances, for example during testing of the seal, it may be desirable to reduce the drag. This can be achieved by screwing the mounting part 36 further out of the housing bore 40.

Thus it will be appreciated that the embodiments of the disclosure described herein may have significant advantages over the prior radial seal arrangements in terms of cost and adjustability.

It will be further appreciated that modifications may be made to the particular embodiments disclosed without departing from the scope of the disclosure. For example, while the mounting part 36 is disclosed as being externally threaded, it may be threadedly engaged with the housing 4 in any suitable manner.

## Claims

1. A rotary sealing arrangement comprising:
a housing (4);
a shaft (6) mounted for rotation within the housing (4) about a shaft axis (A);
a rotary seal (30) provided between the housing (4) and the shaft (6);
the rotary seal (30) comprising a static seal element (32) mounted to the housing (4) and comprising a mounting part (36) and a flexible lip seal (48) extending from the mounting part (36) in an axial direction relative to the shaft (6);
a rotary seal element (34) comprising a seal body (58) comprising an axially facing sealing face (60) and mounted for rotation with the shaft (6), the lip seal (48) resiliently engaging the sealing face (60) of the seal body (58);
the static seal element (32) and the rotary seal element (34) being mounted such that the relative axial positions of the static seal element (32) and the rotary seal element (34) can be adjusted, the mounting part (36) being movable relative to the housing (4)
**characterized in that** the mounting part (36)
comprises an externally threaded portion (38) which is threadably received in a threaded bore (40) in the housing (4) to permit adjustment of the axial position of the static sealing element (32) within the housing (4).

2. A sealing arrangement as claimed in claim 1, wherein the lip seal (48) is mounted to and projects axially from a radially inwardly extending flange (46) of the mounting part (36).

3. A sealing arrangement as claimed in claim 1 or 2, wherein the flexible lip seal (48) comprises a plurality of sealing lips (50).

4. A sealing arrangement as claimed in any preceding claim, wherein the rotary seal element (34) comprises an annular body (58) mounted on the shaft (6).

5. A sealing arrangement as claimed in any preceding claim, wherein said rotary seal element (34) is mounted on said shaft (6) in an axially adjustable manner.

6. A sealing arrangement as claimed in any preceding claim, wherein an abutment face (62) of the rotary seal element (34) opposite the sealing face (60) axially abuts a rotary abutment surface of or coupled to the shaft (6).

7. A sealing arrangement as claimed in any preceding claim, wherein the abutment face (62) abuts a bearing race (64) mounted to the shaft (6).

8. A gearbox comprising an input shaft (6) and an output shaft (8), and a sealing arrangement as claimed in any preceding claim provided between a housing (4) of the gearbox (2) and one or both of the input and output shafts (6, 8).

9. A method of setting the drag of a sealing arrangement as claimed in any of claims 1 to 7 comprising: adjusting the relative axial positions of the rotary sealing element (34) and the static sealing element (32) by means of screwing the static sealing element (32) into or out of the housing bore (40) to effect the movement.

10. A method as claimed in claim 9, as dependent directly or indirectly upon claim 6, comprising removing material from the abutment face (62) of the rotary sealing element (34) to adjust the axial thickness (T) of the sealing element body (58) and thereby adjust the distance between the sealing surface (60) of the rotary sealing element (34) and the rotary abutment (64).

11. A method as claimed in claim 9, as dependent directly or indirectly upon claim 6, comprising placing shims between the abutment face (62) of the rotary sealing element (34) and the rotary abutment to adjust the axial distance between the sealing surface (60) of the rotary sealing element (34) and the rotary abutment (64).

## Patentansprüche

1. Drehdichtungsanordnung, die Folgendes umfasst:
ein Gehäuse (4);
eine Welle (6), die zur Drehung innerhalb des Gehäuses (4) um eine Wellenachse (A) montiert ist;
eine Drehdichtung (30), die zwischen dem Gehäuse (4) und der Welle (6) bereitgestellt ist;
wobei die Drehdichtung (30) ein statisches Dichtungselement (32) umfasst, das an dem Gehäuse (4) montiert ist und ein Montageteil (36) und eine flexible Lippendichtung (48) umfasst, die sich von dem Montageteil (36) in einer axialen Richtung in Bezug auf die Welle (6) erstreckt;
ein drehendes Dichtungselement (34), das einen Dichtungskörper (58) umfasst, der eine axial weisende Dichtungsfläche (60) umfasst und zur Drehung mit der Welle (6) montiert ist, wobei die Lippendichtung (48) die Dichtungsfläche (60) des Dichtungskörpers (58) elastisch in Eingriff nimmt;
wobei das statische Dichtungselement (32) und das drehende Dichtungselement (34) derart montiert sind, dass die relativen axialen Positionen des statischen Dichtungselements (32) und des drehenden Dichtungselements (34) eingestellt werden können, wobei das Montageteil (36) in Bezug auf das Gehäuse (4) bewegbar ist,
**dadurch gekennzeichnet, dass** das Montageteil (36) einen Abschnitt (38) mit Außengewinde umfasst, der mittels Gewinde in einer Gewindebohrung (40) in dem Gehäuse (4) aufgenommen ist, um eine Einstellung der axialen Position des statischen Dichtungselements (32) innerhalb des Gehäuses (4) zuzulassen.

2. Dichtungsanordnung nach Anspruch 1, wobei die Lippendichtung (48) an einem sich radial nach innen erstreckenden Flansch (46) des Montageteils (36) montiert ist und von diesem axial vorsteht.

3. Dichtungsanordnung nach Anspruch 1 oder 2, wobei die flexible Lippendichtung (48) eine Vielzahl von Dichtungslippen (50) umfasst.

4. Dichtungsanordnung nach einem der vorstehenden Ansprüche, wobei das drehende Dichtungselement (34) einen ringförmigen Körper (58) umfasst, der an der Welle (6) montiert ist.

5. Dichtungsanordnung nach einem der vorstehenden Ansprüche, wobei das drehende Dichtungselement (34) an der Welle (6) in einer axial einstellbaren Weise montiert ist.

6. Dichtungsanordnung nach einem der vorstehenden Ansprüche, wobei eine Anlagefläche (62) des drehenden Dichtungselements (34) gegenüber der Dichtungsfläche (60) axial an eine drehende Anlagefläche der Welle (6) oder daran gekoppelt anliegt.

7. Dichtungsanordnung nach einem der vorstehenden Ansprüche, wobei die Anlagefläche (62) an einem Lagerlaufring (64) anliegt, der an der Welle (6) montiert ist.

8. Getriebe, umfassend eine Eingangswelle (6) und eine Ausgangswelle (8) und eine Dichtungsanordnung nach einem der vorstehenden Ansprüche, die zwischen einem Gehäuse (4) des Getriebes (2) und einer oder beiden der Eingangs- und Ausgangswelle (6, 8) bereitgestellt ist.

9. Verfahren zum Festlegen eines Widerstands einer Dichtungsanordnung nach einem der Ansprüche 1 bis 7, umfassend: Einstellen der relativen axialen Positionen des drehenden Dichtungselements (34) und des statischen Dichtungselements (32) mittels Schraubens des statischen Dichtungselements (32) in die oder aus der Gehäusebohrung (40), um die Bewegung zu bewirken.

10. Verfahren nach Anspruch 9, direkt oder indirekt abhängig von Anspruch 6, umfassend Entfernen von Material von der Anlagefläche (62) des drehenden Dichtungselements (34), um die axiale Dicke (T) des Dichtungselementkörpers (58) einzustellen und dadurch den Abstand zwischen der Dichtungsfläche (60) des drehenden Dichtungselements (34) und dem drehenden Anschlag (64) einzustellen.

11. Verfahren nach Anspruch 9, direkt oder indirekt abhängig von Anspruch 6, umfassend Platzieren von Abstandsstücken zwischen der Anlagefläche (62) des drehenden Dichtungselements (34) und des drehenden Anschlags, um den axialen Abstand zwischen der Dichtungsfläche (60) des drehenden Dichtungselements (34) und dem drehenden Anschlag (64) einzustellen.

## Revendications

1. Agencement d'étanchéité rotatif comprenant :
un carter (4) ;
un arbre (6) monté pour tourner à l'intérieur du carter (4) autour d'un axe d'arbre (A) ;
un joint rotatif (30) prévu entre le carter (4) et l'arbre (6) ; le joint rotatif (30) comprenant un élément d'étanchéité statique (32) monté sur le carter (4) et comprenant une partie de montage (36) et un joint à lèvre (48) flexible s'étendant depuis la partie de montage (36) dans une direction axiale par rapport à l'arbre (6) ;
un élément d'étanchéité rotatif (34) comprenant un corps d'étanchéité (58) comprenant une face d'étanchéité (60) orientée axialement et monté pour tourner avec l'arbre (6), le joint à lèvre (48) venant en prise de manière élastique avec la face d'étanchéité (60) du corps d'étanchéité (58) ;
l'élément d'étanchéité statique (32) et l'élément d'étanchéité rotatif (34) étant montés de sorte que les positions axiales relatives de l'élément d'étanchéité statique (32) et de l'élément d'étanchéité rotatif (34) peuvent être ajustées, la partie de montage (36) étant mobile par rapport au carter (4) **caractérisé en ce que** la partie de montage (36)
comprend une partie filetée externe (38) qui est reçue par filetage dans un alésage fileté (40) dans le carter (4) pour permettre l'ajustement de la position axiale de l'élément d'étanchéité statique (32) à l'intérieur du carter (4).

2. Agencement d'étanchéité selon la revendication 1, dans lequel le joint à lèvre (48) est monté sur et dépasse axialement d'une bride s'étendant radialement vers l'intérieur (46) de la partie de montage (36).

3. Agencement d'étanchéité selon la revendication 1 ou 2, dans lequel le joint à lèvre (48) flexible comprend une pluralité de lèvres d'étanchéité (50).

4. Agencement d'étanchéité selon une quelconque revendication précédente, dans lequel l'élément d'étanchéité rotatif (34) comprend un corps annulaire (58) monté sur l'arbre (6).

5. Agencement d'étanchéité selon une quelconque revendication précédente, dans lequel ledit élément d'étanchéité rotatif (34) est monté sur ledit arbre (6) d'une manière ajustable axialement.

6. Agencement d'étanchéité selon une quelconque revendication précédente, dans lequel une face de butée (62) de l'élément d'étanchéité rotatif (34) opposée à la face d'étanchéité (60) bute axialement contre une surface de butée rotative de l'arbre (6) ou couplée à celui-ci.

7. Agencement d'étanchéité selon une quelconque revendication précédente, dans lequel la face de butée (62) bute contre un chemin de roulement (64) monté sur l'arbre (6).

8. Boîte de vitesses comprenant un arbre d'entrée (6) et un arbre de sortie (8), et un agencement d'étanchéité selon une quelconque revendication précédente prévu entre un carter (4) de la boîte de vitesses (2) et l'un ou les deux des arbres d'entrée et de sortie (6, 8).

9. Procédé de réglage du frottement d'un agencement d'étanchéité selon l'une quelconque des revendications 1 à 7, comprenant : l'ajustement des positions axiales relatives de l'élément d'étanchéité rotatif (34) et de l'élément d'étanchéité statique (32) au moyen du vissage de l'élément d'étanchéité statique (32) dans ou hors de l'alésage de carter (40) pour effectuer le mouvement.

10. Procédé selon la revendication 9, dépendant directement ou indirectement de la revendication 6, comprenant l'enlèvement de matière de la face de butée (62) de l'élément d'étanchéité rotatif (34) pour ajuster l'épaisseur axiale (T) du corps d'élément d'étanchéité (58) et ajuster ainsi la distance entre la surface d'étanchéité (60) de l'élément d'étanchéité rotatif (34) et la butée rotative (64).

11. Procédé selon la revendication 9, dépendant directement ou indirectement de la revendication 6, comprenant le placement de cales entre la face de butée (62) de l'élément d'étanchéité rotatif (34) et la butée rotative pour ajuster la distance axiale entre la surface d'étanchéité (60) de l'élément d'étanchéité rotatif (34) et la butée rotative (64).
